# EUROPÄISCHE PATENTSCHRIFT

(11) **EP 0 553 137 B1**
(45) Veröffentlichungstag und Bekanntmachung des Hinweises auf die Patenterteilung: **10.01.1996**
(21) Anmeldenummer: 91917583.6
(22) Anmeldetag: 04.10.1991
(51) Int. Cl.: B01D 19/04, C08G 77/38, C08G 77/46

(54) **VERFAHREN ZUM ENTSCHÄUMEN UND/ODER ENTGASEN VON ORGANISCHEN SYSTEMEN**
PROCESS FOR DEFOAMING AND/OR DEGASSING ORGANIC SYSTEMS
PROCEDE D'ECUMAGE ET/OU DE DEGAZAGE DE SYSTEMES ORGANIQUES

(30) Priorität: 09.10.1990 DE 4032006
(43) Veröffentlichungstag der Anmeldung: 04.08.1993
(73) Patentinhaber: WACKER-CHEMIE GMBH, D-81737 München (DE)
(72) Erfinder: HERZIG, Christian, D-8221 Taching (DE); BURGER, Willibald, D-8263 Burghausen (DE); INNERTSBERGER, Ernst, D-8263 Burghausen (DE); HUBER, Peter, D-8263 Burghausen (DE); BLÖCHL, Martina, D-8342 Tann (DE)
(86) Internationale Anmeldenummer: EP9101896
(87) Internationale Veröffentlichungsnummer: WO9205854

(56) Entgegenhaltungen:
- EP-A- 0 424 960
- DD-A- 255 737
- FR-A- 2 579 481

## Beschreibung

Die Erfindung betrifft ein verfahren zum Entschäumen und/oder Entgasen von organischen Systemen, wobei der Begriff organische Systeme auch solche Systeme umfassen soll, die nicht ganz sondern nur zum überwiegenden Teil aus organischen Verbindungen bestehen.

In US-A-4,906,403 wird die Verwendung eines mit Organopolysiloxangruppen modifizierten Polydiens als Entschäumungs- und/oder Entlüftungsmittels für organische Systeme beschrieben, wobei die Organopolysiloxangruppen über Sauerstoff an Silicium gebundene organische Reste aufweisen. Die dadurch bedingte Hydrolyseanfälligkeit stellt sich insbesondere bei organischen Systemen mit einem gewissen Wassergehalt, wie beispielsweise Erdöl, als nachteilig heraus.

In GB-A 2 173 510 ist ein Verfahren zur Bekämpfung der Schaumbildung bei flüssigen Kohlenwasserstoffkraftstoffen durch Zusatz eines Polysiloxan-Polyoxyalkylen-Copolymeren zum Kohlenwasserstoffkraftstoff beschrieben, wobei nur solche Polysiloxan-Polyoxyalkylen-Copolymere wirksam sind, bei denen der Anteil der Oxyalkylengruppen 25 bis 65 Gewichtsprozent des berechneten Molekulargewichts der Copolymeren ausmacht.

Aus DD-A 255 737 (veröffentlicht am 13.04.1988, G. Sonnek et al., Akademie der Wissenschaften der DDR) sind Siloxanylalkendiyl-bis-ω-hydroxypolyoxyalkylene der allgemeinen Formel 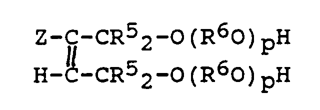
bekannt, wobei Z einen Organosilyl-, Organosiloxanyl- oder Polyorganosiloxanylrest,
R⁵ Wasserstoff oder einen kurzkettigen Alkylrest,
R⁶ eine -CH₂-CH₂- oder -CH(CH₃)-CH₂- Gruppe und
p eine ganze Zahl von 1 bis 50 bedeutet,
sowie deren Verwendung als Tenside.

Beim Umpumpen von flüssigen Kohlenwasserstoffen, wie flüssigen Kohlenwasserstoffkraftstoffen, von einem Behälter in einen anderen Behälter in Anwesenheit von Luft und gegebenenfalls von Wasser, z. B. beim raschen Einleiten von Dieselkraftstoff aus einem Tankwagen in einen Lagertank an der Tankstelle, bildet sich auf der Oberfläche des flüssigen Kohlenwasserstoffkraftstoffes ein teilweise starker und beständiger Schaum, der ein schnelles Einleiten des flüssigen Kohlenwasserstoffkraftstoffes in den Behälter verhindert und auch die Bestimmung der wahren Höhe der Flüssigkeitsoberfläche erschwert.

Ebenfalls kommt es zum Schäumen bei der destillativen Aufarbeitung von Rohöl oder bei Crackprozessen in der Raffinerie. Daneben tritt ein Schäumen auch auf, wenn Erdöl bzw. Rohöl aus einer Lagerstätte mit hohem Lagerdruck gefördert wird und bei der Druckentlastung nach der Förderung niedrigsiedende Kohlenwasserstoffe aus dem Rohöl entweichen.

Ferner kommt es bei Schmierstoffen und Hydraulikölen sowie bei Farben und Lacken zu lamellaren Schäumen und Bildung kleiner, kugelförmiger, weit voneinander getrennter Gasbläschen (sog. Mikroschäume).

Es bestand daher die Aufgabe, Organopolysiloxane bereitzustellen, die zum Entschäumen und/oder Entgasen von organischen Systemen verwendet werden können.

Gegenstand der Erfindung ist ein Verfahren zum Entschäumen und/oder Entgasen organischer Systeme durch Zugabe eines ein Organopolysiloxan enthaltenden Antischaummittels zum organischen System, dadurch gekennzeichnet, daß ein Organopolysiloxan aus Siloxaneinheiten der allgemeinen Formel 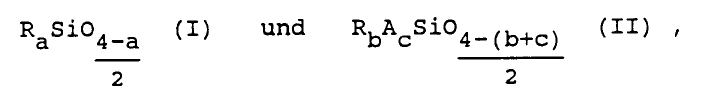
wobei R ein einwertiger Kohlenwasserstoffrest mit 1 bis 18 Kohlenstoffatom(en) je Rest bedeutet, A ein Rest der allgemeinen Formel 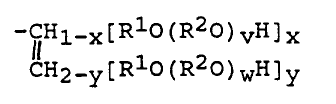
bedeutet, worin
- R¹: einen Rest der Formel -CR³H- bedeutet mit R³ gleich Wasserstoffatom oder einwertiger organischer Rest,
- R²: einen Rest der Formel -CR⁴H-CH₂- oder -CH₂CH₂CH₂- bedeutet mit R⁴ gleich Wasserstoffatom oder einwertiger organischer Rest,
v und w jeweils 0 oder eine ganze Zahl sind, wobei die Summe v+w 0 bis 16 ist,
x und y jeweils 0 oder 1 sind, wobei die Summe x+y 1 oder 2 ist,
a 1, 2 oder 3 ist,
b 0, 1 oder 2 ist und
c 1 oder 2 ist,
wobei die Summe b+c nicht größer als 3 ist,
verwendet wird.

Bevorzugt werden bei dem erfindungsgemäßen Verfahren solche Organopolysiloxane eingesetzt, bei denen die Gruppen R²O 0 oder weniger als 30 Gewichtsprozent, insbesondere 0 bis 25 Gewichtsprozent des berechneten Molekulargewichts des Organopolysiloxans ausmachen.

Bei dem erfindungsgemäßen Verfahren werden bevorzugt solche Organopolysiloxane eingesetzt, bei denen die Summe v+w 0 bis 8, besonders bevorzugt 0 bis 4 ist.

Vorzugsweise besitzen die erfindungsgemäßen Organopolysiloxane eine Viskosität von 50 bis 500 000 mm²/s, besonders bevorzugt von 200 bis 150 000 mm²/s, insbesondere von 300 bis 20 000 mm²/s, jeweils bezogen auf eine Temperatur von 25°C.

Bevorzugt werden bei dem erfindungsgemäßen Verfahren Organopolysiloxane der allgemeinen Formel

R₃SiO(R₂SiO)ₘ(RASiO)ₙSiR₃ (III),

wobei R und A die oben dafür angegebene Bedeutung haben und das Verhältnis von m:n vorzugsweise im Bereich von 1:1 bis 25:1, besonders bevorzugt im Bereich von 1:1 bis 10:1 liegt, eingesetzt.

Die Summe m+n liegt vorzugsweise zwischen 3 und 1 000, besonders bevorzugt zwischen 10 bis 200.

Beispiele für Rest R sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest und der alpha- und der β-Phenylethylrest.

Schon wegen der leichteren Zugänglichkeit sind vorzugsweise mindestens 50 %, insbesondere mindestens 90 %, der Anzahl der Reste R in den erfindungsgemäß eingesetzten Organopolysiloxanen Methylreste.

Bei dem Rest R³ handelt es sich bevorzugt um Wasserstoffatom und Alkylrest mit 1 bis 6 Kohlenstoffatom(en), besonders bevorzugt um Wasserstoffatom.

Bei dem Rest R⁴ handelt es sich bevorzugt um Wasserstoffatom und Alkylrest mit 1 bis 6 Kohlenstoffatom(en), besonders bevorzugt um Wasserstoffatom.

Bevorzugt als Rest R¹ ist der Rest der Formel -CH₂-.

Bevorzugt als Rest R² ist der Rest der Formel -CH₂CH₂-.

Die Bedeutung von c ist bevorzugt 1.

Gegenstand der Erfindung ist weiterhin ein Verfahren zur Herstellung der erfindungsgemäß verwendeten Organopolysiloxane, dadurch gekennzeichnet, daß eine organische Verbindung (1) der allgemeinen Formel 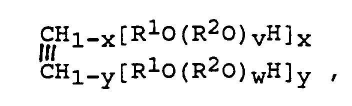
worin R¹, R², v, w, x und y die oben dafür angegebene Bedeutung haben,
mit Organopolysiloxan (2) mit mindestens einem Si-gebundenen Wasserstoffatom je Molekül
in Mengen von 1,03 bis 2,0 Mol organische Verbindung (1) je Grammatom Si-gebundener Wasserstoff im Organopolysiloxan (2) in Gegenwart von die Anlagerung von Si-gebundenem Wasserstoff an aliphatische Mehrfachbindung förderndem Katalysator (3) umgesetzt wird.

Bevorzugt wird organische Verbindung (1) mit Organopolysiloxan (2) mit mindestens einem Si-gebundenen Wasserstoffatom je Molekül in Mengen von 1,03 bis 1,10 Mol je Grammatom Si-gebundenen Wasserstoff im Organopolysiloxan (2) eingesetzt.

Die bei dem Verfahren zur Herstellung der erfindungsgemäß verwendeten Organopolysiloxane eingesetzte organische Verbindung (1) wird vorzugsweise hergestellt durch Umsetzung einer Hydroxyalkinverbindung der allgemeinen Formel 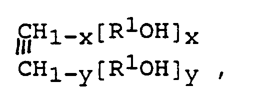
wobei R¹, x und y die oben dafür angegebene Bedeutung haben, mit Alkylenoxid in Gegenwart eines elektrophilen Katalysators, wie in DD-A 255 737 beschrieben.

Vorzugsweise wird bei dem Verfahren zur Herstellung der erfindungsgemäß verwendeten Organopolysiloxane als Organopolysiloxan (2) mit mindestens einem Si-gebundenen Wasserstoffatom je Molekül ein solches aus Siloxaneinheiten der allgemeinen Formel 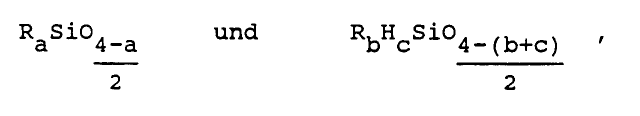
wobei R, a, b und c die oben dafür angegebene Bedeutung haben, eingesetzt.

Bevorzugt wird ein Organopolysiloxan (2) der allgemeinen Formel

R₃SiO(R₂SiO)ₘ(RHSiO)ₙSiR₃ ,

wobei R, n und m die oben dafür angegebene Bedeutung haben, eingesetzt.

Die Viskosität der Organopolysiloxane (2) beträgt vorzugsweise 1 bis 10 000 mm²/s, besonders bevorzugt 5 bis 250 mm²/s, jeweils bezogen auf eine Temperatur von 25°C.

Bevorzugte Beispiele für Organopolysiloxane (2) sind Mischpolymerisate aus Trimethylsiloxan-, Dimethylsiloxan- und Methylhydrogensiloxaneinheiten.

Verfahren zur Herstellung von Organopolysiloxanen (2) mit mindestens einem Si-gebundenen Wasserstoffatom je Molekül auch von solchen der bevorzugten Art sind bekannt.

Bei dem verfahren zur Herstellung der erfindungsgemäß verwendeten Organopolysiloxane können als die Anlagerung von Si-gebundenen Wasserstoff an aliphatische Mehrfachbindung fördernde Katalysatoren (3) die gleichen Katalysatoren eingesetzt werden, die auch bisher zur Förderung der Anlagerung von Si-gebundenen Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 1 bis 1 000 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von organischer Verbindung (1) und Organopolysiloxan (2), eingesetzt.

Ist x oder y 1, wenn also beispielsweise organische Verbindung (1) der Formel

HC≡CCH₂OCH₂CH₂OH

bei dem Verfahren zur Herstellung der erfindungsgemäß verwendeten Organopolysiloxane eingesetzt wird, entstehen bei der Umsetzung mit Organopolysiloxan (2) mit mindestens einem Si-gebundenen Wasserstoffatom je Molekül folgende isomere Reste A

-CH=CHCH₂OCH₂CH₂OH

und

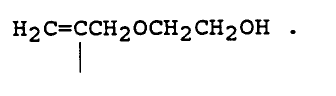

Die Umsetzung von organischer Verbindung (1) mit Organopolysiloxan (2) wird vorzugsweise beim Druck der umgebenden Atmosphäre, also etwa bei 1020 hPa (abs.), durchgeführt, sie kann aber auch bei höheren oder niedrigeren Drücken durchgeführt werden. Ferner wird die Umsetzung vorzugsweise bei einer Temperatur von 80°C bis 140°C, besonders bevorzugt 110°C bis 140°C, durchgeführt.

Bei dem Verfahren zur Herstellung der erfindungsgemäß verwendeten Organopolysiloxane werden vorzugsweise organische Lösungsmittel in Mengen von 0 bis 90 Gewichtsprozent, bezogen auf das Gesamtgewicht von organischer Verbindung (1) und Organopolysiloxan (2), mitverwendet. Beispiele für organische Lösungsmittel sind Toluol, Xylol, Ethylbenzol, Dioxan, 1,2-Dimethoxyethan, Butylacetat, Ethylbutyrat, Methylisobutylketon, Cyclohexanon, Diethylenglycoldimethylether und Butyrolacton.

Beispiele für organische Systeme sind flüssige Kohlenwasserstoffe oder flüssige Kohlenwasserstoffe enthaltende Zusammensetzungen sowie Lacke und Farben, welche in Lösemittel gelöste Kunstharze, wie beispielsweise Polyvinylchlorid, Copolymerisate aus Vinylchlorid, Vinylacetat und Maleinsäure, Polyester, säurehärtende Kombinationen aus Alkydharzen, Melaminharzen und Nitrocellulose, enthalten.

Bei den organischen Systemen handelt es sich bei dem erfindungsgemäßen Verfahren vorzugsweise um weniger polare organische Systeme, besonders bevorzugt um flüssige Kohlenwasserstoffe oder flüssige Kohlenwasserstoffe enthaltende Zusammensetzungen, insbesondere um Kohlenwasserstoffkraftstoffe, wobei als Kohlenwasserstoffkraftstoffe Dieselkraftstoffe, Düsentreibstoffe und Rohöl bevorzugt sind.

Unter dem Ausdruck Dieselkraftstoffe werden Gasöle und Treiböle und bevorzugt solche Dieselkraftstoffe verstanden, wie sie beispielsweise für Motorfahrzeuge, wie Personenkraftwagen und Lastwagen, oder auch für Schiffe verwendet werden. Zu Dieselkraftstoffen gehören auch leichtes Haus- und Heizöl, wie es zum Heizen verwendet wird. Diese Materialien haben allgemein eine Viskosität von höchstens 28 mm²·s⁻¹ bei 38°C und einen Siedepunkt im Bereich von 100 bis 380°C. Insbesondere haben solche Kraftstoffe eine Viskosität von 2 bis 8 mm²·s⁻¹ bei 20 °C, einen Kohlenstoffrückstand (nach Conradson) von weniger als 0,10 Gew.-%, einen Wassergehalt von weniger als 0,05 Gew.-%, einen Schwefelgehalt von weniger als 0,30 Gew.-% und einen Heizwert von etwa 10 000 bis 10 400 kJ/kg.

Unter dem Ausdruck Düsentreibstoffe werden Kerosin, Leicht- und Mittelöle verstanden, die einen Siedebereich zwischen 150 und 300°C besitzen.

Das erfindungsgemäße Verfahren kann auch zur Bekämpfung der Schaumbildung bei anderen flüssigen Kohlenwasserstoffkraftstoffen, wie beispielsweise bei Rückstandsölen mit einem Siedepunkt von mehr als 380°C, bei leichten, mittleren und schweren Naphthas und bei Benzinen verwendet werden.

Die flüssigen Kohlenwasserstoffkraftstoffe können üblicherweise zugesetzte Additive enthalten.

Das erfindungsgemäße Verfahren eignet sich ferner zum Entschäumen von entgasendem, frisch gefördertem Erdöl bzw. Rohöl und/oder zur Verhinderung oder Verminderung des Schäumens bei der destillativen Aufarbeitung des Rohöls und bei Crackprozessen in der Raffinerie.

Das erfindungsgemäße Verfahren ist ebensfalls geeignet zum Entschäumen und Entgasen von Schmierstoffen und Hydraulikölen sowie von Farben und Lacken, welche in Lösemittel gelöste Kunstharze enthalten.

Vorzugsweise erfolgt der Zusatz der erfindungsgemäßen Organopolysiloxane zu den organischen Systemen in Mengen von 1,0 bis 5 000 Gew.-ppm, bevorzugt 2,5 bis 1 000 Gew.-ppm, insbesondere 5 bis 200 Gew.-ppm, jeweils bezogen auf das Gesamtgewicht der organischen Systeme. Der erfindungsgemäße Zusatz der Organopolysiloxane erfolgt vorzugsweise in Form von Lösungen. Die Organopolysiloxane werden mit den Lösungsmitteln lediglich verdünnt, damit sie leichter den zu entschäumenden und/oder entgasenden Materialien zugesetzt werden können und in diesen besser verteilt werden können. Beispiele für Lösungsmittel sind Ethoxypropylacetat, Ethylglycolacetat, Di-n-butyloxalat, Cyclohexanon und Methylisobutylketon.

Die Menge an Organopolysiloxan beträgt in den Lösungen vorzugsweise 2,5 bis 80 Gew.-%, bezogen auf das Gesamtgewicht der Lösungen. Es sind keine weiteren Zusätze erforderlich, um die erfindungsgemäßen Organopolysiloxane als Antischaummittel wirksam zu machen.

### Herstellung der Organopolysiloxane (Siloxan) 1 bis 16

Unter Stickstoff werden 1,05 Mol des in Tabelle 1 angegebenen Alkins vorgelegt und mit der in Tabelle 1 angegebenen Menge Lösungsmittel vermischt. Dazu wird in 1-Octen gelöstes Platintetrachlorid in einer solchen Menge zugegeben, daß, bezogen auf das Gesamtgewicht aller Bestandteile der Reaktionsmischung, 10 Gewichts-ppm Platin, berechnet als Element, in der Reaktionsmischung enthalten sind. Bei 125°C wird innerhalb von 2 bis 4 Stunden das in Tabelle 1 angegebene Si-gebundenen Wasserstoff enthaltende Organopolysiloxan (H-Siloxan) in einer solchen Menge, die 1,0 g Sigebundenem Wasserstoff entspricht, zugegeben. Das H-Siloxan B hat folgende allgemeine Formel

HMe₂SiO(Me₂SiO)_{6,5}SiMe₂H (B) ,

während das H-Siloxan C folgende allgemeine Formel

Me₃SiO(Me₂SiO)ₘ(MeHSiO)ₙSiMe₃ (C) ,

besitzt, wobei Me ein Methylrest ist und m und n die in Tabelle 3 angegebene Bedeutung haben. Die Reaktion erfolgt innerhalb der in Tabelle 1 angegebenen Zeit bis zu dem in Tabelle 1 angegebenen Umsatz an Si-gebundenem Wasserstoff (Nicht umgesetzter Si-gebundener Wasserstoff wird volumetrisch durch Freisetzen mit KOH bestimmt). Bei 100°C und 14 hPa (abs.) werden Lösungsmittel und flüchtige Bestandteile innerhalb 1 Stunde destillativ entfernt. Die Ausbeute an den so erhaltenen, gelb bis braun gefärbten Organopolysiloxanen ist nahezu quantitativ. Organopolysiloxane mit mehr als 30 Gew.-% C₂H₄O-Gruppen können zu Trübungen neigen.

Das ¹H-NMR-Spektrum (CDCl₃) liefert für die Organopolysiloxane 2 bis 6 und 8 bis 16 folgende Daten:
δ = 6,2 ppm 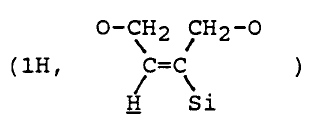
Das ¹H-NMR-Spektrum für die Organopolysiloxane 1 und 7 ist aufgrund der Bildung der beiden isomeren Reste A komplexerer Natur.

Das bei der Herstellung der Organopolysiloxane 1 und 7 eingesetzte Alkin

HC≡CCH₂O(C₂H₄O)_{1,1}H

ist unter der Bezeichnung "Golpanol PME" bei der Fa. BASF käuflich erwerblich. Das bei der Herstellung der Organopolysiloxane 4, 8, 10, 12, 13 und 16 eingesetzte Alkin 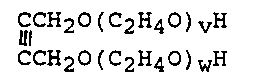
v+w=2,2 ,
wobei pro Molekül 2,2 C₂H₄O-Gruppen vorliegen, ist unter der Bezeichnung "Golpanol BEO" bei der Fa. BASF käuflich erwerblich. Das bei der Herstellung der Organopolysiloxane 5 und 14 bzw. 9, 11 und 15 eingesetzte Alkin 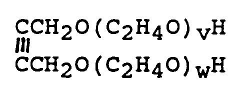
v+w=8,8 bzw. 13,8 ,
wobei pro Molekül 8,8 bzw. 13,8 C₂H₄O-Gruppen vorliegen, wird durch Umsetzung von 2-Butin-1,4-diol mit Ethylenoxid, wie in Kirk-Othmer, Encyclopedia of Chemical Technology, 2. Auflage, Band 10, Seite 638 ff beschrieben, hergestellt.

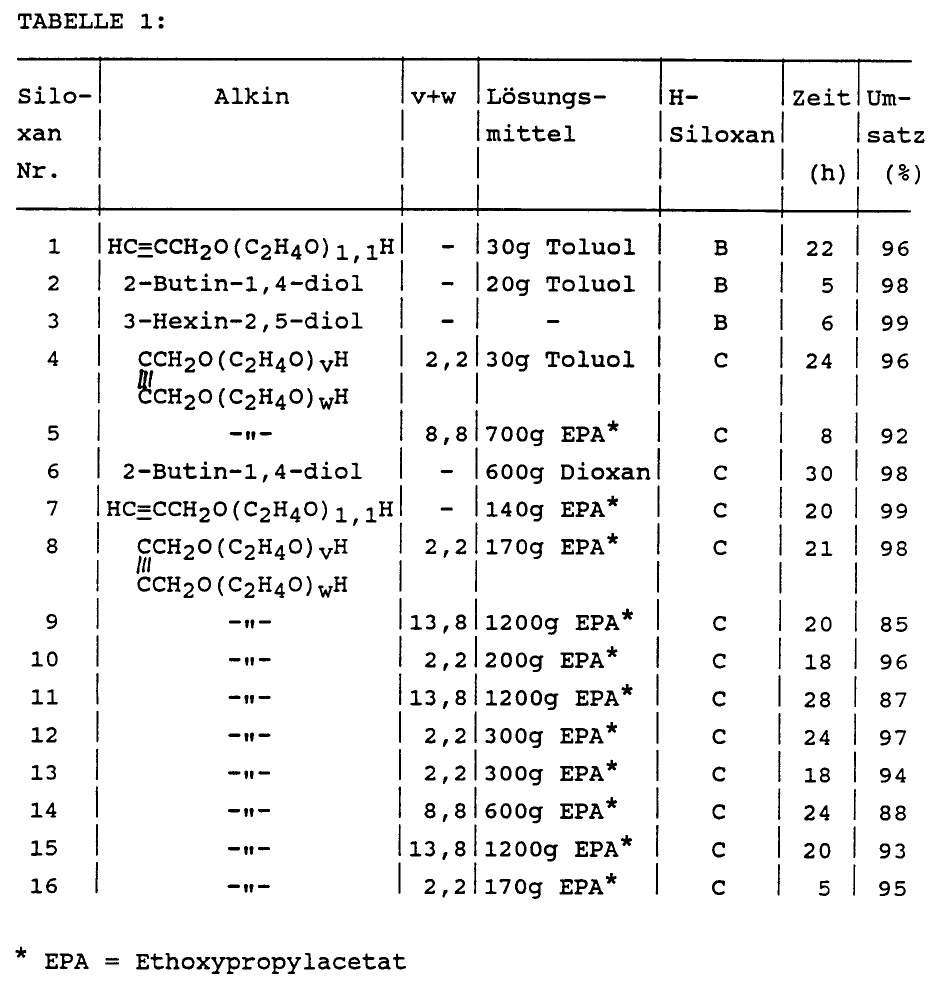

### Beispiele 1 bis 13:

Die Organopolysiloxane 1 bis 3 haben folgende allgemeine Formel:

AMe₂SiO(Me₂SiO)_{6,5}SiMe₂A ,

wobei Me einen Methylrest bedeutet und der Rest A die in Tabelle 2 angegebene Bedeutung hat. In der Tabelle 2 sind ebenfalls das Molekulargewicht, die Viskosität und die Gewichtsprozent Oxyethylengruppen, bezogen auf das Gesamtgewicht des jeweiligen Organopolysiloxans, angegeben.

Die Organopolysiloxane 4 bis 16 haben folgende allgemeine Formel:

Me₃SiO(Me₂SiO)ₘ(MeASiO)ₙSiMe₃ ,

wobei Me einen Methylrest bedeutet und A, m und n die in Tabelle 3 angegebene Bedeutung haben. Das Molekulargewicht, die Viskosität und die Gewichtsprozent Oxyethylengruppen, bezogen auf das Gesamtgewicht des jeweiligen Organopolysiloxans, sind ebenfalls in Tabelle 3 angegeben.

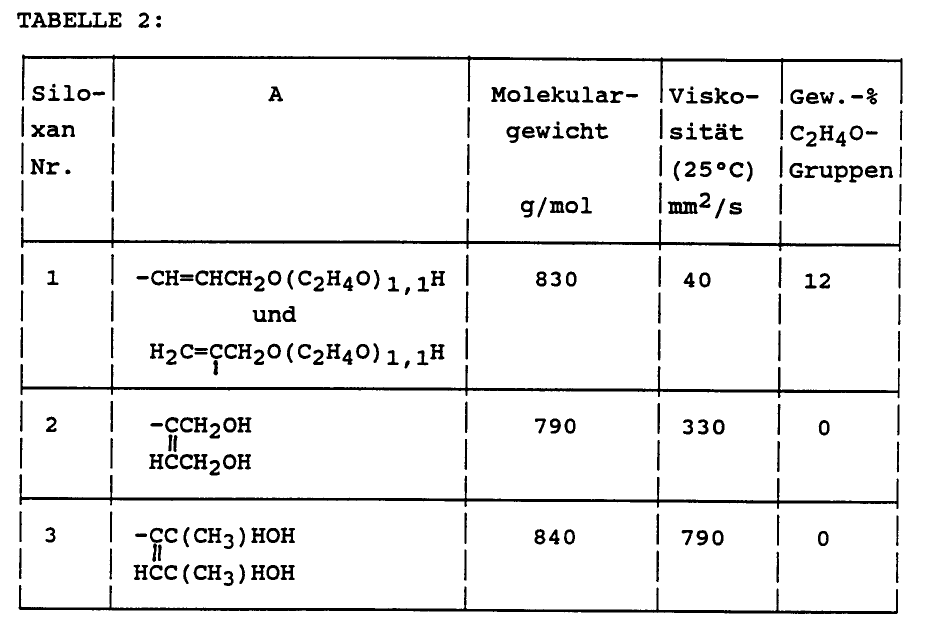

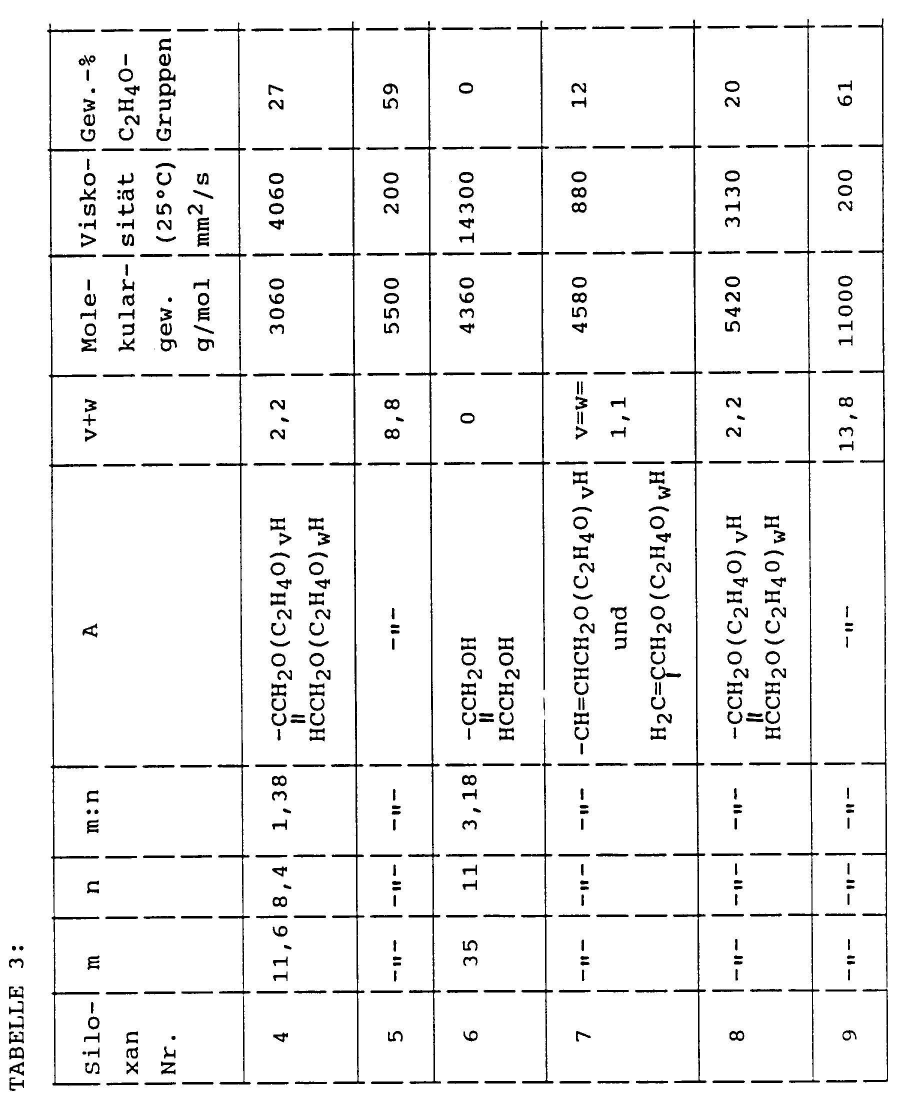

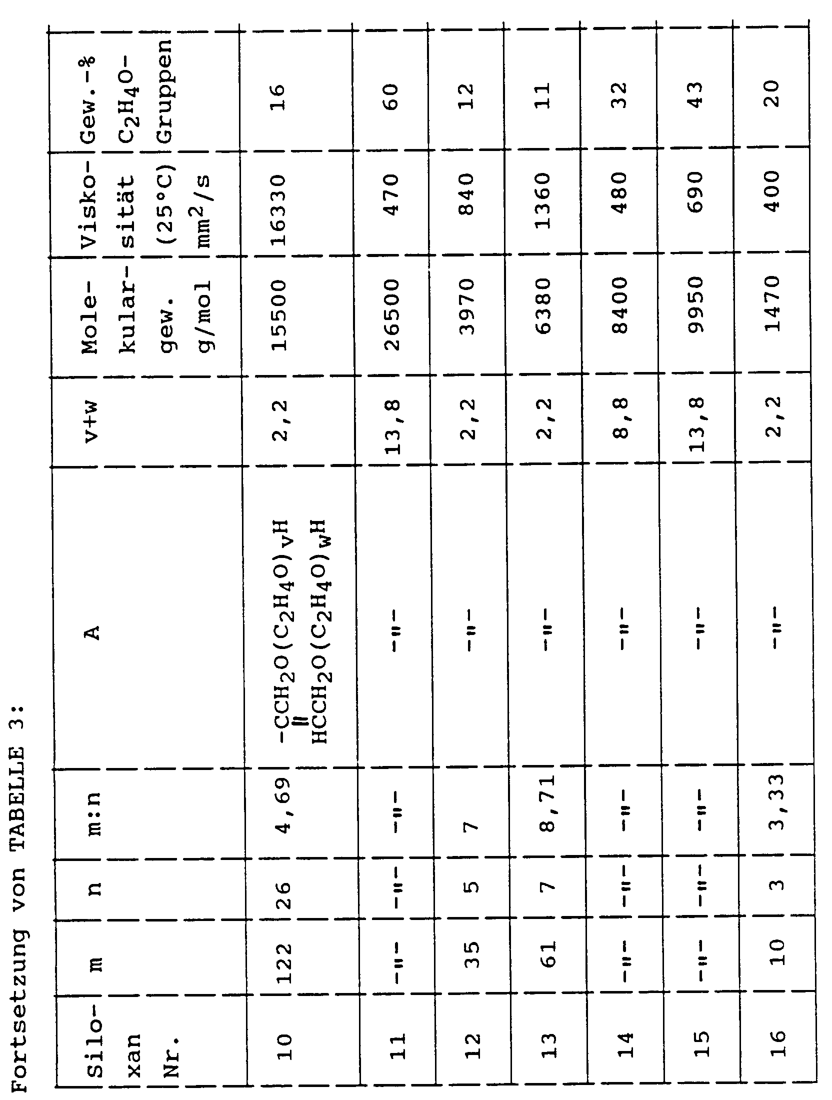

Die Wirksamkeit dieser Organopolysiloxane als Antischaummittel zur Bekämpfung des Schäumens von Dieselkraftstoff wird anhand eines Testverfahrens bestimmt, welches am besten den Tankvorgang an einer Tankstelle, das Umpumpen des Dieselkraftstoffs aus einem Tankwagen in den Vorratstank einer Tankstelle, simuliert. Die Versuche werden mit einem additivfreien Winterdieselkraftstoff der Firma DMP Mineralöl Petrochemie GmbH, D-8263 Burghausen, geprüft nach DIN 51601 durchgeführt.

Zu jeweils 250 g Dieselkraftstoff werden jeweils 7,5 Gew.-ppm bzw. 15 Gew.-ppm des jeweils in der Tabelle 4 angegebenen Organopolysiloxans, welches in Tabelle 2 bzw. 3 näher charakterisiert ist, in Form einer 10 %igen Lösung in Ethoxypropylacetat zugegeben und anschließend in ein 500 ml Druckgefäß überführt. Das Druckgefäß wird rasch verschlossen und die Austrittsöffnung (Durchmesser der Austrittsöffnung = 1 mm) genau über der Mitte eines 500 ml Meßzylinders zentriert. Die Austrittsöffnung und der obere Rand des Meßzylinders liegen dabei in einer Ebene. Unter einem konstanten Preßluftdruck von 1 bar wird dann innerhalb eines über einen Timer gesteuerten Zeitraums von 6 Sekunden die Dieselkraftstoffmischung in den Meßzylinder abgelassen. Gemessen werden jeweils das Schaum-/Flüssigkeitsvolumen in ml und die Schaumzerfallszeit in Sekunden. Die Schaumzerfallszeit ist dann beendet, wenn der volle Flüssigkeitsspiegel des Dieselkraftstoffes sichtbar wird. Als Blindprobe wird ein Vergleichsversuch V1 ohne Anwesenheit eines Antischaummittels durchgeführt. Die Ergebnisse sind in Tabelle 4 zusammengefaßt.

**TABELLE 4**

| Beispiel | Siloxan Nr. | Siloxanzugabe [Gew.-ppm] | Schaum-/Flüssigkeitsvolumen [ml] | Schaumzerfallszeit [s] |
|---|---|---|---|---|
| 1 | 1 | 15 | 350 | 20 |
| 2 | 2 | 15 | 375 | 22 |
| 3 | 3 | 15 | 500 | 42 |
| 4 | 4 | 7,5 | 350 | 18 |
| | | 15 | 310 | 13 |
| 5 | 5 | 7,5 | 410 | 24 |
| | | 15 | 340 | 12 |
| 6 | 6 | 7,5 | 320 | 12 |
| | | 15 | 290 | 5 |
| 7 | 7 | 7,5 | 300 | 8 |
| | | 15 | 280 | 4 |
| 8 | 8 | 7,5 | 300 | 9 |
| | | 15 | 290 | 5 |
| 9 | 9 | 7,5 | 440 | 33 |
| | | 15 | 400 | 21 |
| 10 | 10 | 7,5 | 340 | 14 |
| | | 15 | 300 | 6 |
| 11 | 12 | 7,5 | 310 | 20 |
| | | 15 | 290 | 9 |
| 12 | 13 | 7,5 | 300 | 12 |
| | | 15 | 290 | 6 |
| 13 | 14 | 7,5 | 440 | 28 |
| | | 15 | 375 | 25 |
| V1 | - | - | 500 | 56 |

Die Ergebnisse aus Tabelle 4 zeigen, daß die Organopolysiloxane 1 bis 3 im Vergleich zur Blindprobe V1 zwar schaumverhindernde Eigenschaften besitzen, aber ansonsten relativ schlechte Antischaummittel darstellen.

Des weiteren ist den Ergebnissen aus Tabelle 4 zu entnehmen, daß die Organopolysiloxane 6, 7, 8, 10, 12 und 13 als Antischaummittel sehr gut wirksam sind. Das Organopolysiloxan 4 ist als Antischaummittel bedingt wirksam, während die Organopolysiloxane 5, 9 und 14 als Antischaummittel schlecht geeignet sind.

### Beispiele 14 bis 18

In einem mit Flügelrührer, Manometer, Überdruckventil und Thermometer versehenen, temperierbaren 11-Gasautoklaven mit seitlich angebrachter Austrittsleitung (Durchmesser der Austrittsleitung = 4 mm) werden jeweils 100 ml Rohöl (dead crude oil) vom Feld Statfjord (erhältlich bei Statoil, gefördert im Frühjahr 1990) und die in Tabelle 5 angegebene Menge an Organopolysiloxan, welches in Tabelle 3 näher charakterisiert ist, in Form einer 10 %igen Lösung in Ethoxypropylacetat vorgelegt. Nach Thermostatisierung auf 40 °C wird bei 250 Umdrehungen/Minute das so erhaltene Gemisch für eine Dauer von 10 Minuten bei einem Druck von 8·10⁵ Pa mit Methangas gesättigt. Dananch wird über ein Umklappventil das mit Methangas gesättigte Rohöl in einen 250 ml Meßzylinder abgelassen. Bei einem Restdruck von 1·10⁵ Pa wird der Entspannungsvorgang beendet und das Umklappventil erneut betätigt. Gemessen werden jeweils das Schaum-/Flüssigkeitsvolumen in ml und die Schaumzerfallszeit in Sekunden. Die Schaumzerfallszeit ist dann beendet, wenn der volle Flüssigkeitsspiegel der Rohölmischung sichtbar wird. Als Blindprobe wird ein Vergleichsversuch V2 ohne Anwesenheit eines Antischaummittels durchgeführt. Die Ergebnisse sind in Tabelle 5 zusammengefaßt.

**TABELLE 5**

| Beispiel | Siloxan Nr. | Siloxanzugabe [Gew.-ppm] | Schaum-/Flüssigkeitsvolumen [ml] | Schaumzerfallszeit [s] |
|---|---|---|---|---|
| 14 | 4 | 100 | 103 | 8 |
| 15 | 5 | 100 | 187 | 37 |
| 16 | 6 | 100 | 105 | 10 |
| 17 | 8 | 50 | 115 | 19 |
| | | 75 | 105 | 9 |
| | | 100 | 103 | 7 |
| 18 | 9 | 100 | 173 | 56 |
| V2 | - | - | 189 | 98 |

### Beispiele 19 bis 22

Die in den Beispielen 14 bis 18 beschriebene Arbeitsweise wird wiederholt mit der Abänderung, daß anstelle des Rohöls vom Feld Statfjord Rohöl vom Feld Oseberg (erhältlich bei Norsk-Hydro, gefördert im Frühjahr 1990) eingesetzt wird. Als Blindprobe wird ein Vergleichsversuch V3 ohne Anwesenheit eines Antischaummittels durchgeführt. Die Ergebnisse sind in Tabelle 6 zusammengefaßt.

**TABELLE 6**

| Beispiel | Siloxan Nr. | Siloxanzugabe [Gew.-ppm] | Schaum-/Flüssigkeitsvolumen [ml] | Schaumzerfallszeit [s] |
|---|---|---|---|---|
| 19 | 5 | 50 | 173 | 65 |
| 20 | 6 | 50 | 103 | 8 |
| 21 | 8 | 10 | 162 | 19 |
| | | 25 | 109 | 10 |
| | | 50 | 103 | 7 |
| 22 | 9 | 50 | 173 | 65 |
| V3 | - | - | 183 | 92 |

## Patentansprüche

1. Verfahren zum Entschäumen und/oder Entgasen organischer Systeme durch Zugabe eines ein Organopolysiloxan enthaltenden Antischaummittels zum organischen System, dadurch gekennzeichnet, daß ein Organopolysiloxan aus Siloxaneinheiten der allgemeinen Formel 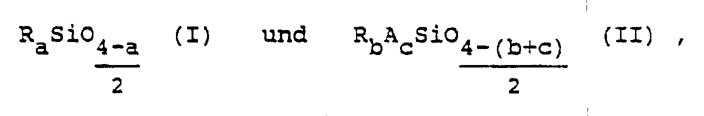 wobei R ein einwertiger Kohlenwasserstoffrest mit 1 bis 18 Kohlenstoffatom(en) je Rest bedeutet, A ein Rest der allgemeinen Formel 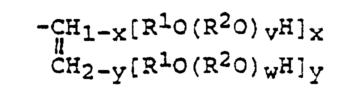 bedeutet, worin
R¹ einen Rest der Formel -CR³H- bedeutet mit R³ gleich Wasserstoffatom oder einwertiger organischer Rest,
R² einen Rest der Formel -CR⁴H-CH₂- oder -CH₂CH₂CH₂- bedeutet mit R⁴ gleich Wasserstoffatom oder einwertiger organischer Rest,
v und w jeweils 0 oder eine ganze Zahl sind, wobei die Summe v+w 0 bis 16 ist,
x und y jeweils 0 oder 1 sind, wobei die Summe x+y 1 oder 2 ist,
a 1, 2 oder 3 ist,
b 0, 1 oder 2 ist und
c 1 oder 2 ist,
wobei die Summe b+c nicht größer als 3 ist,
verwendet wird.

2. Verfahren nach Anspruch 1, dadurch gekennzeichnet, daß die Gruppen R²O 0 oder weniger als 30 Gewichtsprozent des berechneten Molekulargewichts des Organopolysiloxans ausmachen.

3. Verfahren nach Anspruch 1 oder 2, dadurch gekennzeichnet, daß ein Organopolysiloxan der allgemeinen Formel
R₃SiO(R₂SiO)ₘ(RASiO)ₙSiR₃ (III) ,
wobei das Verhältnis von m:n im Bereich von 1:1 bis 25:1 liegt,
R einen einwertigen Kohlenwasserstoffrest mit 1 bis 18 Kohlenstoffatomen je Rest bedeutet,
A ein Rest der allgemeinen Formel 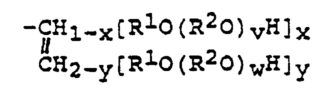 bedeutet, worin
R¹ einen Rest der Formel -CR³H- bedeutet mit R³ gleich Wasserstoffatom oder einwertiger organischer Rest,
R² einen Rest der Formel -CR⁴H-CH₂ - oder -CH₂CH₂CH₂- bedeutet mit R⁴ gleich Wasserstoffatom oder einwertiger organischer Rest,
v und w jeweils 0 oder eine ganze Zahl sind, wobei die Summe v+w 0 bis 16 ist,
x und y jeweils 0 oder 1 sind, wobei die Summe x+y 1 oder 2 ist,
a 1, 2 oder 3 ist,
b 0, 1 oder 2 ist und
c 1 oder 2 ist,
wobei die Summe b+c nicht größer als 3 ist, verwendet wird.

4. Verfahren nach Anspruch 3, dadurch gekennzeichnet, daß das Verhältnis von m:n im Bereich von 1:1 bis 10:1 liegt.

5. Verfahren nach einem oder mehreren der Ansprüche 1 bis 4, dadurch gekennzeichnet, daß die Gruppen R²O 0 oder weniger als 25 Gewichtsprozent des berechneten Molekulargewichts des Organopolysiloxans ausmachen.

6. Verfahren nach einem oder mehreren der Ansprüche 1 bis 5, dadurch gekennzeichnet, daß die Summe v+w 0 bis 8 ist.

7. Verfahren nach einem oder mehreren der Ansprüche 1 bis 6, dadurch gekennzeichnet, daß die Summe v+w 0 bis 4 ist.

8. Verfahren nach einem oder mehreren der Ansprüche 1 bis 7, dadurch gekennzeichnet, daß R¹ einen Methylenrest und R² einen Ethylenrest bedeutet.

9. Verfahren nach einem oder mehreren der Ansprüche 1 bis 8, dadurch gekennzeichnet, daß es sich bei den organischen Systemen um flüssige Kohlenwasserstoffe oder flüssige Kohlenwasserstoffe enthaltende Zusammensetzungen handelt.

10. Verfahren zur Herstellung von Organopolysiloxanen nach einem oder mehreren der Ansprüche 1 bis 8, dadurch gekennzeichnet, daß eine organische Verbindung (1) der allgemeinen Formel 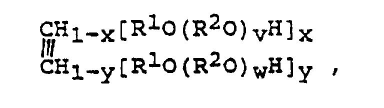 worin R¹ einen Rest der Formel -CR³H- bedeutet mit R³ gleich Wasserstoffatom oder einwertiger organischer Rest,
R² einen Rest der Formel -CR⁴H-CH₂- oder -CH₂CH₂CH₂- bedeutet mit R⁴ gleich Wasserstoffatom oder einwertiger organischer Rest,
v und w jeweils 0 oder eine ganze Zahl sind, wobei die Summe v+w 0 bis 16 ist,
x und y jeweils 0 oder 1 sind, wobei die Summe x+y 1 oder 2 ist,
mit Organopolysiloxan (2) mit mindestens einem Si-gebundenen Wasserstoffatom je Molekül
in Mengen von 1,03 bis 2,0 Mol organische Verbindung (1) je Grammatom Si-gebundener Wasserstoff im Organopolysiloxan (2)
in Gegenwart von die Anlagerung von Si-gebundenen Wasserstoff an aliphatische Mehrfachbindung förderndem Katalysator (3) umgesetzt wird.

## Claims

1. Process for defoaming and/or degassing organic systems by adding an organopolysiloxane-containing antifoam to the organic system, characterized in that an organopolysiloxane composed of siloxane units of the general formula 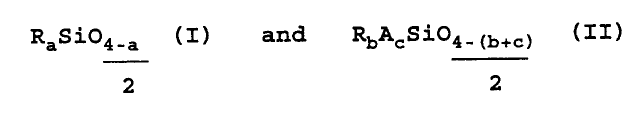 in which R denotes a monovalent hydrocarbon radical having 1 to 18 carbon atoms per radical, A denotes a radical of the general formula 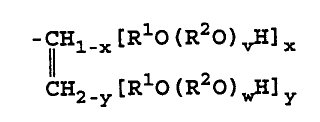 in which
R¹ denotes a radical of the formula -CR³H-, where R³ is a hydrogen atom or a monovalent organic radical,
R² denotes a radical of the formula, -CR⁴H-CH₂- or -CH₂CH₂CH₂-, where R⁴ is a hydrogen atom or a monovalent organic radical,
v and w are each 0 or an integer, the sum of v+w being 0 to 16, and
x and y are each 0 or 1, the sum of x+y being 1 or 2,
a is 1, 2 or 3,
b is 0, 1 or 2 and
c is 1 or 2,
the sum of b+c not being greater than 3,
is used.

2. Process according to Claim 1, characterized in that the R²O groups make up 0 or less than 30 per cent by weight of the calculated molecular weight of the organopolysiloxane.

3. Process according to Claim 1 or 2, characterized in that an organopolysiloxane of the general formula
R₃SiO(R₂SiO)ₘ(RASiO)ₙSiR₃ (III)
in which the ratio of m:n is in the range from 1:1 to 25:1,
R denotes a monovalent hydrocarbon radical having 1 to 18 carbon atoms per radical,
A denotes a radical of the general formula 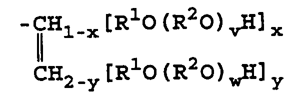 in which
R¹ denotes a radical of the formula -CR³H-, where R³ is a hydrogen atom or a monovalent organic radical,
R² denotes a radical of the formula -CR⁴H-CH₂- or -CH₂CH₂CH₂-, where R⁴ is a hydrogen atom or a monovalent organic radical,
v and w are each 0 or an integer, the sum of v+w being 0 to 16, and
x and y are each 0 or 1, the sum of x+y being 1 or 2,
a is 1, 2 or 3,
b is 0, 1 or 2 and
c is 1 or 2,
the sum of b+c not being greater than 3, is used.

4. Process according to Claim 3, characterized in that the ratio of m:n is in the range from 1:1 to 10:1.

5. Process according to one or more of Claims 1 to 4, characterized in that the R²O groups make up 0 or less than 25 per cent by weight of the calculated molecular weight of the organopolysiloxane.

6. Process according to one or more of Claims 1 to 5, characterized in that the sum of v+w is 0 to 8.

7. Process according to one or more of Claims 1 to 6, characterized in that the sum of v+w is 0 to 4.

8. Process according to one or more of Claims 1 to 7, characterized in that R¹ denotes a methylene radical and R² denotes an ethylene radical.

9. Process according to one or more of Claims 1 to 8, characterized in that the organic systems are liquid hydrocarbons or compositions containing liquid hydrocarbons.

10. Process for the preparation of organopolysiloxanes according to one or more of Claims 1 to 8, characterized in that an organic compound (1) of the general formula 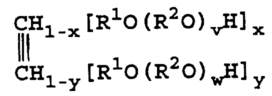 in which R¹ denotes a radical of the formula -CR³H-, where R³ is a hydrogen atom or a monovalent organic radical,
R² denotes a radical of the formula -CR⁴H-CH₂- or -CH₂CH₂CH₂-, where R⁴ is a hydrogen atom or a monovalent organic radical,
v and w are each 0 or an integer, the sum of v+w being 0 to 16, and
x and y are each 0 or 1, the sum of x+y being 1 or 2, is reacted with an organopolysiloxane (2) having at least one Si-bonded hydrogen atom per molecule,
in amounts of from 1.03 to 2.0 mol of organic compound (1) per gram atom of Si-bonded hydrogen in the organopolysiloxane (2),
in the presence of a catalyst (3) which promotes the addition of Si-bonded hydrogen to an aliphatic multiple bond.

## Revendications

1. Procédé pour démousser et/ou dégazer des systèmes organiques, par addition au système organique d'un antimousse contenant un organopolysiloxane, caractérisé en ce que l'on utilise un organopolysiloxane composé de motifs siloxane de formules générales 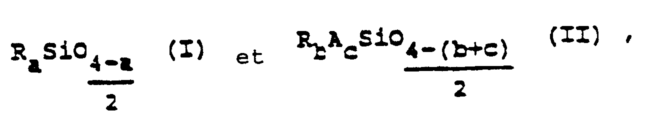 dans lesquelles R désigne un radical hydrocarboné monovalent comportant 1 à 18 atomes de carbone par radical,
A désigne un radical de formule générale 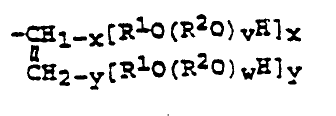 dans laquelle
R¹ désigne un radical de formule -CR³H-, dans laquelle
R³ est un atome d'hydrogène ou un radical organique monovalent,
R² désigne un radical de formule -CR⁴H-CH₂- ou -CH₂CH₂CH₂-, où R⁴ est un atome d'hydrogène ou un radical organique monovalent,
v et w sont chacun nuls ou des nombres entiers, la somme v+w valant de 0 à 16, et
x et y sont chacun nuls ou égaux à 1, la somme x+y valant 1 ou 2,
a vaut 1, 2 ou 3,
b vaut 0, 1 ou 2, et
c vaut 1 ou 2,
la somme b+c n'étant pas supérieure à 3.

2. Procédé selon la revendication 1, caractérisé en ce que les groupes R²O constituent 0 ou moins de 30 pour cent en poids de la masse moléculaire calculée de l'organopolysiloxane.

3. Procédé selon la revendication 1 ou 2, caractérisé en ce que l'on utilise un organopolysiloxane de formule générale
R₃SiO(R₂SiO)ₘ(RASiO)ₙSiR₃ (III)
dans laquelle le rapport m:n est dans la gamme de 1:1 à 25:1,
R désigne radical hydrocarboné monovalent comportant 1 à 18 atomes de carbone par radical,
A désigne un radical de formule générale 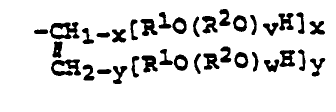 dans laquelle
R¹ désigne un radical de formule -CR³H-, dans laquelle
R³ est un atome d'hydrogène ou un radical organique monovalent,
R² désigne un radical de formule -CR⁴H-CH₂ - ou -CH₂CH₂C-H₂-, où R⁴ est un atome d'hydrogène ou un radical organique monovalent,
v et w sont chacun nuls ou des nombres entiers, la somme v+w valant de 0 à 16, et
x et y sont chacun nuls ou égaux à 1, la somme x+y valant 1 ou 2,
a vaut 1, 2 ou 3,
b vaut 0, 1 ou 2, et
c vaut 1 ou 2,
la somme b+c n'étant pas supérieure à 3.

4. Procédé selon la revendication 3, caractérisé en ce que le rapport m:n est dans la gamme de 1:1 à 10:1.

5. Procédé selon l'une quelconque des revendications 1 à 4, caractérisé en ce que les groupes R²O constituent 0 ou moins de 25 pour cent en poids de la masse moléculaire calculée de l'organopolysiloxane.

6. Procédé selon l'une quelconque des revendications 1 à 5, caractérisé en ce la que somme v+w vaut de 0 à 8.

7. Procédé selon l'une quelconque des revendications 1 à 6, caractérisé en ce la que somme v+w vaut de 0 à 4.

8. Procédé selon l'une quelconque des revendications 1 à 7, caractérisé en ce que R¹ désigne un radical méthylène et R² désigne un radical éthylène.

9. Procédé selon l'une quelconque des revendications 1 à 8, caractérisé en ce que les systèmes organiques sont des hydrocarbures liquides ou des compositions contenant des hydrocarbures liquides.

10. Procédé de préparation d'organopolysiloxanes selon l'une quelconque des revendications 1 à 8, caractérisé en ce que l'on fait réagir un composé organique (1) de formule générale 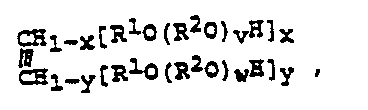 dans laquelle
R¹ désigne un radical de formule -CR³H-, dans laquelle
R³ est un atome d'hydrogène ou un radical organique monovalent,
R² désigne un radical de formule -CR⁴H-CH₂- ou -CH₂CH₂CH₂-, où R⁴ est un atome d'hydrogène ou un radical organique monovalent,
v et w sont chacun nuls ou des nombres entiers, la somme v+w valant de 0 à 16, et
x et y sont chacun nuls ou égaux à 1, la somme x+y valant 1 ou 2,
avec un organopolysiloxane (2) possédant au moins un atome d'hydrogène lié à un Si par molécule,
en proportions de 1,03 à 2,0 moles de composé organique (1) par atome-gramme d'hydrogène lié à Si dans l'organopolysiloxane (2),
en présence d'un catalyseur (3) qui favorise l'addition d'hydrogène lié à Si sur une liaison multiple aliphatique.
